Europäisches Patentamt

European Patent Office

Office européen des brevets

(19)

(11) Veröffentlichungsnummer : **0 073 001**
**B1**

(12)

# EUROPÄISCHE PATENTSCHRIFT

(45) Veröffentlichungstag der Patentschrift :
26.06.85

(51) ·Int. Cl.⁴ : **C 08 F   6/24**

(21) Anmeldenummer : 82107470.5

(22) Anmeldetag : 17.08.82

(54) Verfahren zur Entfernung von Katalysatorresten aus Polyolefinen.

(30) Priorität : 21.08.81 DE 3133101

(43) Veröffentlichungstag der Anmeldung :
02.03.83 Patentblatt 83/09

(45) Bekanntmachung des Hinweises auf die Patenterteilung : 26.06.85 Patentblatt 85/26

(84) Benannte Vertragsstaaten :
BE DE FR GB IT NL

(56) Entgegenhaltungen :
FR-A- 1 363 804
US-A- 2 827 445
Die Akte enthält technische Angaben, die nach dem
Eingang der Anmeldung eingereicht wurden und ·die
nicht in dieser Patentschrift enthalten sind.

(73) Patentinhaber : HOECHST AKTIENGESELLSCHAFT
Postfach 80 03 20
D-6230 Frankfurt am Main 80 (DE)

(72) Erfinder : Kablitz, Hans-Jürgen, Dr.
Amselweg 3a
D-6237 Liederbach (DE)
Erfinder : Strametz, Helmut, Dr.
Unterlindau 72
D-6000 Frankfurt am Main (DE)

Jouve, 18, rue St-Denis, 75001 Paris, France

**Beschreibung**

Die vorliegende Erfindung betrifft ein Verfahren zur Entfernung von Katalysatorresten aus Polyolefinen, welche unter Verwendung von Magnesiumhalogeniden, Titan- und Aluminiumverbindungen enthaltenden Mischkatalysatoren hergestellt worden sind.

Für die Polymerisation von Ethylen und höheren Olefinen wie Propylen sowie die Copolymerisation von Ethylen mit höheren Olefinen werden Katalysatorsysteme eingesetzt, deren Übergangsmetall-Komponente größere Mengen an Magnesiumchlorid bzw. ein anderes Magnesiumhalogenid sowie unter Umständen auch Halogenide des Aluminiums und der Alkali- und Erdalkalimetalle enthält. Die Polymerisationsaktivität eines solchen Systems kann sehr hoch sein, so daß man Polyolefine mit nur geringem Gehalt an Katalysatorresten herstellen kann. Für viele Einsatzgebiete kann daher auf einen Reinigungsschritt zur Entfernung von Katalysatorresten aus den Polymeren verzichtet werden. Manche Anwendungen von Polyolefinen erfordern jedoch äußerst niedrige Mengen an Verunreinigungen. Außerdem kann es vorteilhaft oder sogar zwingend sein, auf korrosionshemmende Zusätze im Polymeren zu verzichten. Dies gilt zum Beispiel für die Herstellung von Fasern mit sehr feinen Titern, von dünnen Folien sowie für den Einsatz als Isoliermaterial (Dielektrika in Kondensatoren, Kabelummantelungen) und für Lebensmittelverpackungen. In diesen Fällen müssen die Katalysatorreste entfernt werden.

Es ist bekannt, daß Polypropylen, welches unter Verwendung von Magnesiumchlorid enthaltenden Katalysatoren hergestellt wurde, dadurch gereinigt werden kann, daß man der Suspension des Polymeren in einem inerten Kohlenwasserstoff einen aliphatischen Alkohol mit 3 bis 8 Kohlenstoffatomen zusetzt (vgl. DE-OS 2 436 989).

Bekannt ist ferner ein Verfahren zur Entfernung von Katalysatorresten aus Polyolefinen, bei welchem der Lösung des Polyolefins eine Fettsäure zugesetzt wird, um die Katalysatorreste löslich zu machen (vgl. FR-PS 1 363 804). Die Lösung wird sodann über ein Absorptionsmittel auf Basis Kieselgel oder Tonerde gegeben.

Ebenfalls bekannt ist ein Verfahren zur Reinigung von Polyolefinen, bei welchem die Katalysatorreste zunächst vorbehandelt werden, beispielsweise mit einem Peroxid, um dann mit einer Fettsäure reagieren zu können (vgl. US-PS 2 827 445). Danach werden die löslich gemachten Schwermetallverbindungen mit einem unpolaren, diese Verbindungen lösenden Lösemittel ausgewaschen.

Zur Entfernung von im wesentlichen aus Magnesiumchlorid bestehenden Katalysatorresten in einem ersten Behandlungsschritt unter Ausschluß von Wasser und Alkoholen können auch aliphatische Monocarbonsäuren mit 1 bis 3 Kohlenstoffatomen benutzt werden, während die Verwendung höherer Carbonsäuren mit mehr als 3 Kohlenstoffatomen als ungünstiger angesehen wird (vgl. JP-OS Sho 52-49285). Die Behandlung kann in einer Suspension in einem inerten Verdünnungsmittel, in der Gasphase oder in der Schmelze erfolgen. In einem zweiten Schritt kann mit Wasser, Alkali, Inertgas oder durch Vakuum nachbehandelt werden.

Weiterhin ist ein Reinigungsverfahren zur Beseitigung von Magnesiumchlorid aus Polyolefinen bekannt, das mit Hilfe von aromatischen Monocarbonsäuren, Polycarbonsäuren oder Hydroxycarbonsäuren, vorzugsweise aliphatischen Polycarbonsäuren mit 2 bis 6 Kohlenstoffatomen und in der Schmelze unter Ausschluß von Wasser durchgeführt wird (vgl. JP-OS Sho 52-69488).

Auch der Einsatz von Glykol-monoethern zur Entfernung von Magnesiumchlorid aus Polypropylen ist bekannt (vgl. JP-OS Sho 54-142 290).

Schließlich wird der Einsatz von Anhydriden langkettiger, aromatischer oder bifunktioneller Carbonsäuren bzw. von Carbonsäureestern oder Lactonen zur Entfernung der Halogene enthaltenden Katalysatorbestandteile beschrieben (JP-OS Sho 55-147 508, JP-OS Sho 55-147 509, JP-OS Sho 55-147 510).

Die Nachteile der vorbeschriebenen Zusätze zur Reinigung von Polypropylen bestehen darin, daß ihre Wirksamkeit bezüglich der Entfernung von Magnesiumhalogenid zu wünschen übrig läßt. Es müssen entweder große Mengen von mehreren Gewichtsprozent der entsprechenden Chemikalien zugesetzt werden, oder es bedarf sehr hoher Temperaturen oder sogar mehrerer Behandlungsschritte, um den gewünschten Reinigungseffekt zu erzielen. Eine nachteilige Begleiterscheinung der Zusätze mit niedrigem Siedepunkt ist außerdem, daß sie sich im nicht umgesetzten Monomeren oder im inerten Verdünnungsmittel anreichern können.

Einzelne dieser Stoffe neigen auch zu unübersichtlichen Reaktionen mit den Katalysatorbestandteilen, so daß eine Fülle von Nebenprodukten entsteht, die das überschüssige Monomer und das Verdünnungsmittel verschmutzen können und nur schwer davon abtrennbar sind.

Es wurde nun gefunden, daß der aus dem Katalysatorsystem herrührende Gehalt an Titan- und Magnesiumhalogeniden und Aluminiumverbindungen in Polyolefinen durch Behandeln mit einer höheren, vorzugsweise verzweigten, aliphatischen Monocarbonsäure mit 6 bis 10 Kohlenstoffatomen beträchtlich gesenkt werden kann.

Gegenstand der Erfindung ist somit ein Verfahren zum Entfernen der Katalysatorreste aus Polyolefinen, welche mittels Magnesiumhalogenide, Titan- und Aluminiumverbindungen enthaltenden Katalysatoren hergestellt wurden, durch Behandeln des in einem flüssigen Medium suspendierten Polyolefins mit einer aliphatischen Monocarbonsäure und Abtrennen und Auswaschen des Polyolefins,

2

das dadurch gekennzeichnet ist, daß man die Behandlung mit 0,1 bis 1,5 Gew.-%, bezogen auf trockenes Polyolefin, mindestens einer aliphatischen Monocarbonsäure mit 6 bis 10 Kohlenstoffatomen bei einer Temperatur von 40 bis 90 °C 10 bis 120 Minuten lang durchführt.

Das erfindungsgemäße Verfahren ist für alle Homo- und Copolymerisate von Ethylen, Propylen und höheren 1-Olefinen geeignet, welche unter Verwendung von Katalysatorsystemen hergestellt wurden, die neben Titanhalogeniden überwiegend Magnesiumhalogenide und Aluminiumalkylverbindungen enthalten.

Das Verfahren wird in einem flüssigen Medium durchgeführt, zweckmäßigerweise direkt nach der Polymerisation des Olefins. Fand die Polymerisation in Suspension statt, entweder im flüssigen Monomeren oder in einem inerten Verdünnungsmittel, so kann gegebenenfalls die Suspension mit einem niedrigsiedenden Verdünnungsmittel verdünnt werden. Fand hingegen die Polymerisation in der Gasphase statt, bei welcher das Polymere als Pulver anfällt, wird eine Suspension des Polymeren in einem niedrigsiedenden Verdünnungsmittel, z. B. einer Butan-, Pentan- oder Hexanfraktion hergestellt.

Die Behandlung des Polymers erfolgt bei einer Temperatur von 40 bis 90 °C, vorzugsweise 60 bis 75 °C. Die Behandlungsdauer richtet sich nach der Porosität und Korngrößenverteilung des Polymerkorns und liegt im Bereich von 10 bis 120 Minuten, vorzugsweise bei 30 bis 60 Minuten. Die Menge an Behandlungsmittel steht im Zusammenhang mit der Produktivität der Titan- und Magnesiumhalogenidhaltigen Katalysatorkomponente und der Menge der als Cokatalysator zugesetzten Aluminiumalkylverbindung und liegt im Bereich von 0,1 bis 1,5 Gew.-% vorzugsweise 0,2 bis 0,5 Gew.-%, bezogen auf das trockene Polymer. Das Verfahren kann sowohl diskontinuierlich als auch kontinuierlich durchgeführt werden. Besonders vorteilhaft ist es, wenn das Behandlungsmittel in einer Gegenstromwäsche auf das Polymere einwirkt.

Zu diesem Zweck wird die Polymersuspension in einen mit Rührer und Einbauten versehenen Waschturm eingeführt, wobei die flüssige Phase mit dem Behandlungsmittel sich von unten nach oben bewegt, während die Polymerteilchen zu Boden sinken.

Im kontinuierlichen Betrieb kann die Entfernung der Katalysatorreste auch in einem Rührkessel oder in zwei oder mehreren hintereinander geschalteten Apparaten erfolgen.

Beim erfindungsgemäßen Verfahren wird als Behandlungsmittel mindestens eine aliphatische, vorzugsweise verzweigte, Monocarbonsäure mit 6 bis 10, vorzugsweise 7 bis 9 Kohlenstoffatomen verwendet. Beispiele derartiger Säuren sind

n-Hexansäure (Capronsäure), Isobutylessigsäure, sec-Butylessigsäure, Diethylessigsäure, Methyl-n-propylessigsäure, Methyl-i-propylessigsäure, Dimethylethylessigsäure,

n-Heptansäure (Oenanthsäure), Methylbutylessigsäure, Ethyl-n-propylessigsäure, Methyl-diethylessigsäure,

n-Octansäure (Caprylsäure), 2-Ethylhexansäure, i-Octansäure, die isomeren Nonansäuren und isomeren Decansäuren. Vorzugsweise werden die durch Hydroformylierung von höheren Monoolefinen und anschließende Oxidation erhaltenen Produkte oder Produktgemische eingesetzt. So handelt es sich beispielsweise bei der bevorzugt verwendeten i-Octansäure (IOS) und i-Nonansäure (INS) um Mischungen isomerer $C_8$- oder $C_9$-Carbonsäuren. Besonders bevorzugt ist 2-Ethylhexansäure (2-EHS).

Die Säuren können in reiner Form oder im Gemisch verwendet werden.

Eigenschaften der bevorzugt verwendeten Säuren

| | Bestimmungs-methode | 2-EHS | IOS | INS | Dimen-sion |
|---|---|---|---|---|---|
| Siedebereich (bei 1013 mbar) | DIN 51 751 | 226–230 | 225–241 | 232–246 | $^\circ$C |
| Dichte (bei 20 $^\circ$C) | DIN 51 757 | 0,905–0,907 | 0,912–0,919 | 0,895–0,902 | $g/cm^3$ |
| Brechungs-zahl $n_D^{20}$ | DIN 53 491 | 1,425–1,426 | 1,429–1,431 | 1,429–1,431 | |
| Säurezahl | DIN 53 402 | $>385$ | $>380$ | $>347$ | mg KOH/g |
| Viskosität (bei 20 $^\circ$C) | DIN 51 550 | 7,7 | $\approx 7,5$ | 11,2 | mPa.s |

Wie schon erwähnt, läßt sich das erfindungsgemäße Verfahren auf alle Systeme anwenden, die mit Hilfe einer Magnesium und Titan enthaltenden Katalysatorkomponente A und einem eine Aluminiumalkylverbindung enthaltenden Cokatalysator B erhalten wurden.

Die Komponente A dieses Katalysators kann beispielsweise hergestellt worden sein durch Umsetzen des Reaktionsprodukts eines Magnesiumhalogenids und eines Elektronendonors und/oder eines Cyclopolyens mit dem Reaktionsprodukt von Titantetrachlorid mit einer aluminiumorganischen Verbindung bei Temperaturen von − 50 bis + 80 °C (vgl. z. B. DE-OS 28 30 039). Sie kann auch hergestellt werden durch Umsetzen des Reaktionsprodukts eines Magnesiumhalogenids und einer Elektronendonorverbindung mit Titantetrachlorid (vgl. DE-OS 26 43 143) durch Umsetzung von Magnesiumethylat mit Titantetrachlorid (vgl. z. B. DE-AS 17 95 197).

Eine weitere Möglichkeit besteht in der Umsetzung eines Magnesiumhalogenids mit einem Reaktionsprodukt von Titantetrachlorid mit einem Elektronendonor (vgl. z. B. DE-OS 22 30 672).

Die Reaktionen des Magnesiumhalogenids mit den verschiedenen Zusätzen erfolgen in der Regel durch Mahlen. Dabei können dem Magnesiumhalogenid gegebenenfalls auch noch weitere anorganische Verbindungen zugesetzt werden, die später zum Teil ebenfalls durch das erfindungsgemäße Verfahren entfernt werden können, wie LiCl, $Na_2SO_4$, $CaCl_2$, $CaCO_3$, $CaSO_4$, MgO, $AlCl_3$, $Al_2O_3$, $SiO_2$, $TiO_2$. Auch können mehrere Elektronendonorverbindungen gleichzeitig oder nacheinander eingesetzt werden, die ihrerseits auch wieder Komplexe bilden können, beispielsweise mit $AlCl_3$ oder $TiCl_4$.

Der Cokatalysator B kann aus einer Aluminiumalkylverbindung der Formel $AlR_3$ oder $AlR_2Hal$ bestehen, wobei R ein geradkettiger oder verzweigter Alkylrest und Hal ein Chlorid- oder Bromidrest sein kann. Vorzugsweise verwendet werden die Verbindungen Aluminiumtriethyl, Aluminiumtriisobutyl und Aluminiumdiethylchlorid.

Geeignet sind jedoch auch Reaktionsprodukte von Aluminiumtriisobutyl bzw. Aluminiumdiisobutylhydrid mit Dienen, beispielsweise Isopren. Letzteres ist als Aluminiumisoprenyl im Handel.

Insbesondere bei der Polymerisation in Anwesenheit von Propylen wird die Aluminiumalkylverbindung in der Regel mit einer Elektronendonorverbindung komplexiert eingesetzt werden. Dafür kommen insbesondere Ester von Carbonsäuren in Frage. Aber auch Ether, Thioether sowie Stickstoff- und Phosphorverbindungen und Cyclopolyene können eingesetzt werden, entweder einzeln oder als Gemische. Die Elektronendonorverbindung kann auch getrennt vom Cokatalysator als Komponente C direkt in die Polymerisationsmischung eindosiert werden.

Das erfindungsgemäße Verfahren kann für die Entfernung der Reste aller Katalysatorsysteme des obenerwähnten Types herangezogen werden, unabhängig davon, ob dieselben zur Herstellung eines Homopolymers, eines statistischen oder eines Blockcopolymers eingesetzt wurden. Besonders wirksam ist es bei allen Homo- und Copolymeren des Propylens. Durch seine Anwendung wird vor allem der Gehalt an Aluminium, Magnesium, Titan und Chlorid verringert. Die dadurch erhaltenen aschearmen Produkte können mit großem Vorteil zur Herstellung von Folien und Kabelummantelungen mit hoher Durchschlagfestigkeit und niedrigem dielektrischem Verlustfaktor eingesetzt werden. Die korrodierende Wirkung der Produke auf Verarbeitungsmaschinen wird stark verringert. Dadurch kann man die zum Polymeren zugesetzte Menge an Säurefänger wie z. B. Ca-Stearat, Magnesiumoxid oder Hydrotalcit drastisch senken. Außerdem wird der Geruch von Behältern und Verpackungen für Lebensmittel stark vermindert. Die folgenden Beispiele sollen die Erfindung veranschaulichen.

## Beispiel 1

Man verwendet für die Polymerisation von Propylen eine $TiCl_3$-haltige Katalysatorkomponente A, die gemäß Beispiel 1 der DE-OS 28 30 039 hergestellt wurde.

702 g wasserfreies Magnesiumchlorid (7,37 Mol) und 170,4 g Benzoesäureethylester (1,13 Mol) werden in einer Vibrationskugelmühle 100 Stunden unter Stickstoff gemahlen. Das verwendete stahgefäß hat einen Inhalt von 5 l. Es werden 15 kg Stahlkugeln aus rostfreiem Stahl mit einem Durchmesser von 15 mm eingesetzt.

In einem 10 l-Rührgefäß werden Ausschluß von Luft und Feuchtigkeit 1 090 ml einer hydrierten, sauerstoff-freien Benzinfraktion (Kp 130 bis 170 °C) und 550 ml Titantetrachlorid (5 Mol) vorgelegt. Bei 0 °C wird innerhalb von 8 Stunden unter Rühren (250 U/min) und Stickstoffüberlagerung eine Lösung von 1 111,2 g Aluminiumethylsesquichlorid (enthält 4,5 Mol Aluminiumdiethylmonochlorid) in 3 334 g der gleichen Benzinfraktion zugetropft. Es scheidet sich ein rotbrauner feiner Niederschlag aus. Danach wird 2 Stunden bei 0 °C und anschließend 12 Stunden bei Raumtemperatur weitergerührt.

Anschließend wird unter Rühren und Stickstoffüberlagerung 4 Stunden auf 60 °C erhitzt. Nach dem Abkühlen und Absitzen des Niederschlages wird die überstehende Mutterlauge dekantiert und das feste Reaktionsprodukt dreimal mit je 2 000 ml der Benzinfraktion ausgewaschen. Für die weiteren Umsetzungen wird der Feststoff in einer solchen Menge der Benzinfraktion suspendiert, daß eine Konzentration von 1 Mol $TiCl_3$ pro 1 l erreicht wird. Die Bestimmung des Gehaltes der Suspension an dreiwertigem Titan erfolgt durch Titration mit einer $Ce^{III}$-Lösung.

6,56 g des Umsetzungsproduktes aus Magnesiumchlorid und Benzoesäureethylester werden in 100 ml der Benzinfraktion suspendiert. Unter Rühren und Argonüberlagerung werden bei 80 °C 19,3 mMol Ti) der $TiCl_3$ enthaltenden Suspension innerhalb von 10 Minuten zugegeben. Anschließend wird

4

das Reaktionsgemisch 2 Stunden bei 80 °C gehalten. Nach dem Abkühlen auf Raumtemperatur wird der Feststoff (Katalysatorkomponente A) unter Ausschluß von Luft und Feuchtigkeit abgesaugt und 2 mal mit je 100 ml der Benzinfraktion ausgewaschen und in 100 ml Benzinfraktion suspendiert. Der Titangehalt wird colorimetrisch bestimmt und auf 1 Mol pro Liter eingestellt.

In einem 70 l-Rührautoklaven werden unter Ausschluß von Luft und Feuchtigkeit bei Raumtemperatur 35 l Flüssigpropylen und 0,2 bar Wasserstoff vorgelegt und die Katalysatorkomponeten, mit je 5 l Flüssigpropylen verdünnt, aus einer Schleuse in folgender Reihenfolge und in den folgenden Mengen zugegeben :

80 mMol (= 10,97 ml) Aluminiumtriethyl, 25 mMol (= 25 ml einer 1 molaren Hexan-Lösung) p-Toluylsäure-methyl-ester und zuletzt 1 mMol Titan in Form von 11,5 ml eines die obige Katalysatorkomponente A enthaltenden Gemisches in Hexan.

Der Kesselinhalt wird durch Wärmezufuhr innerhalb von 10 Minuten auf eine Temperatur von 75 °C gebracht, wobei die Polymerisation einetzt, und dann bei dieser Temperatur gehalten. Der Kesseldruck beträgt 34 bar. Nach einer Polymerisationsdauer von 3 Stunden wird die Reaktion langsamer.

Der erwarteten Ausbeute entsprechend dosiert man 11,4 g 2-Ethylhexansäure (2-EHS) ein und rührt noch 30 Minuten bei 70 °C Innentemperatur weiter. Danach wird die Suspension bei 70 °C über ein Druckfilter filtriert. Anschließend wird der feste Rückstand nochmals mit 30 l Flüssigpropylen versetzt und 30 Minuten bei 70 °C gerührt. Nach erneutem Filtrieren der Suspension über das Druckfilter wird der Feststoff mit Hexan bei Raumtemperatur auf ein anderes Druckfilter gespült, abfiltriert und bei 70 °C in einem Vakuumtrockenschrank getrocknet. Die Ausbeute beträgt 5,84 kg entsprechend 122 kg PP/g Ti, woraus sich die zugesetzte Menge an 2-Ethylhexansäure zu 0,2 Gew.-% errechnet. Das Polymerisat besitzt ein Schüttgewicht von 460 g/l und eine Kugeldruckhärte, gemessen nach DIN 53456, von 84 N/mm$^2$. Der Schmelzindex MFI 230/5 gemessen nach DIN 53012, beträgt 17 g/10 min. Bei der Polymerisation sind 2,4 Gew.-% lösliches (ataktisches) Polypropylen (bezogen auf Gesamtpolymerisat) entstanden. Die durch Analyse festgestellten Restgehalte an Katalysatorbestandteilen sind in Tabelle 1 angegeben.

## Beispiele 2 und 3

Die Polymerisation gemäß Beispiel 1 wird mehrfach wiederholt, wobei die zugesetzten Mengen von 2-Ethylhexansäure stufenweise erhöht und die Behandlungstemperatur verändert werden. Die Versuchsergebnisse entsprechen dem Beispiel 1 mit Ausnahme der in Tabelle 1 aufgeführten Ergebnisse.

## Beispiele 4 und 5

Es werden weitere Polymerisationen gemäß Beispiel 1 durchgeführt, wobei anschließend i-Octansäure (IOS) bzw. i-Nonansäure (INS) zur Entfernung der Katalysatorreste zugesetzt werden. Die erreichte Verringerung dieser Reste in Relation zur Kontaktausbeute ist in Tabelle 2 wiedergegeben.

## Vergleichsbeispiel 1

Die Polymerisation wird gemäß Beispiel 1 durchgeführt, jedoch ohne daß anschließend eine Entfernung der Katalysareste durchgeführt wird. Der Gehalt des Polymeren an diesen Resten in Relation zur Kontaktausbeute ist in Tabelle 1 angegeben.

## Beispiel 6

Man verwendet eine Titan enthaltende Katalysatorkomponente A, die in Anlehnung an das Beispiel 1 der DE-OS 26 43 143 folgendermaßen hergestellt wird :

530 g wasserfreies Magnesiumchlorid (5,57 Mol, enthaltend weniger als 1 Gew.-% Wasser und 280 g Benzoesäureethylester (1,86 Mol) werden in einer Vibrationsmühle 100 Stunden unter Stickstoff gemahlen. Das verwendete Stahlgefäß hat einen Inhalt von 5 l. Es werden 15 kg Stahlkugeln aus rostfreiem Stahl mit einem Durchmesser von 15 mm eingesetzt. 25 g des gemahlenen Produktes werden unter Stickstoffatmosphäre in ein 500 ml-Rührgefäß eingeführt und dort in 375 g TiCl$_4$ suspendiert. Die Suspension wird 2 Stunden bei 80 °C gerührt und danach bei dieser Temperatur filtriert. Der Rückstand wird fünfmal mit siedendem Heptan gewaschen und getrocknet.

In einem 70 l-Rührkessel werden unter Ausschluß von Luft und Feuchtigkeit bei Raumtemperatur 35 l Flüssigpropylen und 0,2 bar Wasserstoff vorgelegt und die Katalysatorkomponenten, mit je 5 l Flüssigpropylen verdünnt, aus einer Schleuse in folgender Reihenfolge und in den folgenden Mengen zugegeben :

40 mMol (= 5,5 ml) Aluminiumtriethyl, 12,5 mMol (= 12,5 ml einer 1-molaren Hexan-Lösung) von p-Toluylsäure-methylester und zuletzt 0,125 mMol Titan in Form von 0,36 g der obigen Katalysatorkomponente. Der Kesselinhalt wird durch Wärmezufuhr innerhalb von 10 Minuten auf eine Temperatur von 70 °C gebracht -wobei die Polymerisation einsetzt- und dann bei dieser Temperatur gehalten. Der Kesseldruck beträgt 34 bar. Nach einer Polymerisationsdauer von einer Stunde wird die Polymerisation langsamer.

Der erwarteten Ausbeute entsprechend dosiert man 11 g 2-Ethylhexansäure (2-EHS) zu, dann wird gemäß Beispiel 1 weitergearbeitet. Die Ausbeute an isoliertem Hauptprodukt beträgt 3,3 kg entsprechend 550 kg PP/g Titan, woraus sich die zugesetze Menge an 2-EHS zu 0,33 Gew.-% errechnet. Die analytisch festgestellten Restgehalte an Katalysatorbestandteilen sind in Tabelle 2 angegeben.

## Beispiele 7 und 8

Die Polymerisationen gemäß Beispiel 6 werden wiederholt, wobei zur Entfernung der Katalysatorreste eine erhöhte Menge 2-EHS bzw. i-Nonansäure eingesetzt wird. Die Ergebnisse sind in Tabelle 2 aufgeführt.

## Beispiel 9

Man verwendet die gemäß Beispiel 6 hergestellte, Titan enthaltende Katalysatorkomponente A. In einem 70 l-Rührkessel werden unter Ausschluß von Luft und Feuchtigkeit bei Raumtemperatur 35 l Flüssigpropylen und 0,4 bar Wasserstoff vorgelegt und die Katalysatorkomponenten, mit je 5 l Flüssigpropylen verdünnt, aus einer Schleuse in folgender Reihenfolge und in den folgenden Mengen zugegeben : 40 mMol (= 5,5 ml) Aluminiumtriethyl, 12,6 mMol p-Toluylsäuremethylester und 0,15 mMol Titan in Form von 0,43 g der obigen Katalysatorkomponente A. Der Kesselinhalt wird durch Wärmezufuhr innerhalb von 10 Minuten auf eine Temperatur von 70 °C gebracht, wobei die Polymerisation einsetzt. Nach einer Polymerisationsdauer von 50 Minuten bei 70 °C und 30 bar Druck wird innerhalb von 5 Minuten auf 60 °C abgekühlt und 20 Minuten lang ständig soviel Ethylen zugeführt, daß der Gesamtdruck 35 bar beträgt. Insgesamt werden 1 720 NL Ethylen eingeleitet. Danach werden der Menge an eingeleitetem Monomer entsprechend 20 g 2-Ethylenhexansäure (2-EHS) zugesetzt, worauf man gemäß Beispiel 1 weiterarbeitet. Die Ausbeute an Blockcopolymer beträgt 2,1 kg entsprechend 292 kg Polymer/g Ti, woraus sich die eingesetzte Menge an 2-EHS zu 0,95 Gew.-% errechnet. Die analytisch festgestellten Restgehalt an Katalysatorbestandteilen sind in Tabelle 2 angegeben.

## Beispiel 10

Man verwendet die gemäß Beispiel 6 hergestellte Titan enthaltende Katalysatorkomponente. In einem 150 l-Rührkessel werden unter Ausschluß von Luft und Feuchtigkeit bei Raumtemperatur 100 l einer Hexanfraktion (Siedebereich 63 bis 70 °C) vorgelegt und auf 35 °C erwärmt. Dann werden 200 mMol (= 27,5 ml) Aluminiumtriethyl, 55,5 mMol (=55,5 ml einer 1-molaren Hexan-Lösung) von p-Toluylsäuremethylester und zuletzt 1 mMol Titan in Form von 2,88 g der obigen Katalysatorkomponente A zugesetzt. Daraufhin wird der Kesselinhalt auf 50 °C erwärmt, worauf man mit dem Einleiten von Propylen und Wasserstoff beginnt. In der ersten halben Stunde werden 3,5 kg Propylen aufgenommen, wobei die Temperatur trotz starken Kühlens auf 70 °C und der Kesseldruck auf 4,2 bar ansteigen. Gleichzeitig wird soviel Wasserstoff zudosiert, daß seine Konzentration in der Gasphase 0,1 Vol.-% beträgt. Eine Stunde nach Beginn der Polymerisation sind 11,7 kg Propylen aufgenommen worden und der Innendruck hat 8 bar erreicht. Nach zwei Stunden sind insgesamt 17,4 kg Propylen bei nunmehr konstantem Innendruck von 8 bar eingeleitet und die Reaktion hat sich stark verlangsamt. Der Kessel wird entspannt, worauf man bei 70 °C der erwarteten Ausbeute entsprechend 16,4 g 2-Ethylhexansäure zusetzt. Man rührt noch 45 Minuten bei dieser Temperatur, wäscht mit 50 l Hexan nach, filtriert das erhaltene Polypropylen ab und trocknet es unter Stickstoff.

Ausbeute 11,3 kg entsprechend 236 kg PP/g Ti, woraus sich die zugesetzte Menge an 2-Ethylhexansäure zu 1,45 Gew.-% errechnet. Das Polymerisat besitzt ein Schüttgewicht von 440 g/l und eine Kugeldruckhärte, gemessen nach DIN 53456, von 81 N/mm$^2$. Der Schmelzindex MFI 230/5 beträgt 6,3 g/10 min.

Bei der Polymerisation sind 3,9 Gew.-% lösliches (ataktisches) Polypropylen (bezogen auf Gesamtpolymerisat) entstanden. Die analytisch festgestellten Restgehalte an Katalysatorbestandteilen sind in Tabelle 2 angegeben.

## Vergleichsbeispiel 2

Die Polymerisationen werden gemäß Beispiel 6 durchgeführt, jedoch ohne daß anschließend eine Entfernung der Katalysatorreste durch Zusatz von 2-Ethylhexansäure vorgenommen wird. Der Gehalt der Polymeren an Katalysatorresten in Relation zur Kontaktausbeute ist in Tabelle 1 angegeben.

## Vergleichsbeispiele 3 und 4

Im Anschluß an die Polymerisation gemäß Beispiel 6 wird Essigsäure (ES) in zwei verschiedenen Konzentrationen zugesetzt (vgl. Tabelle 2). Auch bei hoher Konzentration wird keine gute Entfernung der Katalysatorreste erreicht.

## Vergleichsbeispiele 5 und 6

Die Versuche werden unter Zusatz von Lösungen der Benzoesäure (BS) und Palmitinsäure (PS) in Hexan durchgeführt (vgl. Tabelle 2). Es wird keine Entfernung der Katalysatorreste erreicht.

## Beispiel 11

Man verwendet eine gemäß DE-AS 17 95 197, Beispiel 5, Abschnitt 1 hergestellte Titan enthaltende Katalysatorkomponente, die wie folgt hergestellt wird : 228 g $Mg(OC_2H_5)_2$ (1 Mol) werden in 1 l einer Benzinfraktion (Siedebereich 130-170 °C) suspendiert und mit 4 l einer 1-molaren $TiCl_4$-Lösung in dieser Benzinfraktion versetzt. Die Suspension wird 15 Stunden unter Rückfluß gekocht.

Anschließend wäscht man den Niederschlag durch Zusatz von je 3 l der Benzinfraktion, 15 min Verrühren, Absitzen des Feststoffes und Dekantieren der überstehenden Mutterlauge sechsmal aus. Die über dem Feststoff stehende Benzinfraktion soll frei von Titanverbindung sein. Das Volumen der Suspension wird auf 5 l aufgefüllt. Der Titangehalt der Suspension wird nach $H_2O_2$-Zugabe kolorimetrisch bestimmt. 10 ml Suspension enthalten 2,1 mMol Titanverbindung.

In einem 150 ml-Rührkessel werden unter Ausschluß von Luft- und Feuchtigkeit bei Raumtemperatur 100 l einer Benzinfraktion (Siedebereich 130 bis 170 °C) vorgelegt. Daraufhin werden 440 mMol (= 60,4 ml) Aluminiumtriethyl und 4,2 mMol Titan in Form von 20 ml einer Suspension der obigen Katalysatorkomponente in der Benzinfraktion zugegeben. Der Kesselinhalt wird auf 85 °C hochgeheizt, worauf man soviel Wasserstoff aufdrückt, daß der Innendruck um 2 bar ansteigt. Daraufhin werden 6 Stunden lang 4,5 kg/h Ethylen eingeleitet. Die Polymerisation wird durch langsames Entspannen des Kessels abgestoppt. Der erwarteten Ausbeute entsprechend 150 g 2-Ethylhexansäure zugesetzt. Man rührt noch 30 Minuten bei 85 °C weiter. Schließlich wird das erhaltene Polyethylen durch Filtration bei 85 °C vom Verdünnungsmittel abgetrennt und getrocknet. Ausbeute 25,7 kg entsprechend 128 PE/g Ti. Daraus errechnet sich die eingesetzte Menge an 2-Ethylhexansäure zu 0,6 Gew.-%. Die analytisch festgestellten Restgehalte an Katalysatorbestandteilen sind in Tabelle 3 angegeben.

## Beispiel 12

In einem liegenden 10 l-Reaktor mit wandgängigem Rührer werden 0,5 kg Polyethylenpulver aus einem vorausgegangenem Ansatz gleicher Art vorgelegt. Der Inhalt wird durch mehrmaliges Evakuieren und gründliches Spülen mit Ethylen von Luft und Feuchtigkeit befreit. Der Inhalt wird auf 85 °C hochgeheizt, worauf man 50 mMol (= 6,85 ml) Aluminiumtriethyl und 2,3 mMol Titan in Form von 211 ml der Suspension einer Katalysatorkomponente gemäß Beispiel 11 in einer Dieselölfraktion (Kp. 130-160 °C) zugibt. Man drückt 2,8 bar Wasserstoff auf und leitet anschließend 7 Stunden lang je 0,8 kg/h Ethylen ein. Jetzt wird der Reaktor entspannt, das entstandene Polyethylen unter Rühren und $N_2$-Überlagerung abgelassen und in 20 l Hexan aufgeschlämmt. Man gibt 50 g i-Octansäure (IOS) zu, rührt 30 Minuten bei 75 °C, trennt das Polyethylen vom Verdünnungsmittel ab und trocknet. Ausbeute (nach Abzug der vorgelegten Menge) 5,6 kg entsprechend 51 kg PE/g Ti. Daraus erreicht sich die eingesetzte Menge an IOS zu 0,9 Gew.-%. Die analytisch festgestellten Restgehalte aus Katalysatorbestandteilen sind in Tabelle 3 angegeben.

(Siehe Tabellen, Seite 8 ff.)

## Tabelle 1

Entfernung von Katalysatorresten aus Polypropylen, das unter Verwendung einer Ti-Komponente gemäß DE-OS 28 30 039 hergestellt wurde

| Beispiel Nr. | Kontakt- ausbeute (kg PP/g Ti) | Behandlungs- mittel Art | Menge (1) (Gew.-%) | Behand- lungs- tempe- ratur ($^{o}$C) | Behand- lungs- dauer (min) | Analysenergebnisse Aluminium | Chlorid | (Gew.-ppm) Magnesium | Titan . |
|---|---|---|---|---|---|---|---|---|---|
| 1 | 122 | 2-EHS | 0,2 | 70 | 30 | 59 | 54 | 23 | 3,5 |
| 2 | 101 | " | 0,7 | 75 | 30 | 49 | 43 | 19 | 3,2 |
| 3 | 96 | " | 1,0 | 60 | 30 | 42 | 37 | 17 | 2,5 |
| 4 | 107 | IOS | 0,5 | 50 | 60 | 63 | 55 | 23 | 3,5 |
| 5 | 126 | INS | 0,5 | 80 | 15 | 54 | 51 | 21 | 3,5 |
| V1 | 121 | – | – | 70 | 30 | 276 | 145 | 61 | 6,1 |

(1) bezogen auf trockenes Endprodukt.

## Tabelle 2

**Entfernung von Katalysatorresten aus Polypropylen, welches unter Verwendung einer Ti-Komponente gemäß DE-OS 26 43 143 hergestellt wurde**

| Beispiel Nr. | Kontaktausbeute (kg PP/g Ti) | Behandlungsmittel [1] Art | Menge (Gew.-%) | Analysenergebnisse (Gew.-ppm) Aluminium | Chlorid | Magnesium | Titan |
|---|---|---|---|---|---|---|---|
| 6 | 551 | 2-EHS | 0,33 | 44 | 57 | 15 | 1,5 |
| 7 | 531 | " | 1,1 | 30 | 23 | 11 | 1,0 |
| 8 | 518 | INS | 0,5 | 47 | 41 | 16 | 1,6 |
| 9 | 292 | 2-EHS | 0,95 | 57 | 33 | 19 | 2,1 |
| 10 | 236 | " | 1,45 | 53 | 31 | 18 | 1,8 |
| V2 | 527 | - | - | 145 | 79 | 39 | 1,8 |
| V3 | 514 | ES | 0,6 | 104 | 74 | 33 | 1,7 |
| V4 | 539 | ES | 3,2 | 101 | 71 | 27 | 1,6 |
| V5 | 546 | BS | 0,4 | 123 | 77 | 31 | 1,8 |
| V6 | 539 | PS | 1,2 | 127 | 82 | 29 | 1,9 |

(1) bezogen auf trockenes Endprodukt.

0 073 001

## Tabelle 3

Entfernung von Katalysatorresten aus Polyethylen, welches unter Verwendung einer Ti-Komponente gemäß DE-AS 17 95 197 hergestellt wurde

| Beispiel Nr. | Kontaktausbeute (kg PE/g Ti) | Behandlungsmittel Art | Menge(1) (Gew.-%) | Analysenergebnisse Aluminium | Chlorid | Gew.-ppm) Magnesium | Titan |
|---|---|---|---|---|---|---|---|
| 11 | 128 | 2-EHS | 0,6 | 165 | 59 | 14 | 2 |
| 12 | 51 | IOS | 0,9 | 221 | 87 | 19 | 5 |
| V7 | 113 | – | – | 290 | 119 | 27 | 6 |

(1) bezogen auf trockenes Endprodukt.

**Patentansprüche**

1. Verfahren zum Entfernen der Katalysatorreste aus Polyolefinen, welche mittels Magnesiumhalogenide, Titan und Aluminiumverbindungen enthaltenden Katalysatoren hergestellt wurden, durch Behandeln des in einem flüssigem Medium suspendierten Polyolefins mit einer aliphatischen Monocarbonsäure und Abtrennen und Auswaschen des Polyolefins, dadurch gekennzeichnet, daß man die Behandlung mit 0,1 bis 1,5 Gew.-%, bezogen auf trockenes Polyolefin, mindestens einer aliphatischen Monocarbonsäure mit 6 bis 10 Kohlenstoffatomen bei einer Temperatur von 40 bis 90 °C 10 bis 120 Minuten lang durchführt.

2. Verfahren gemäß Anspruch 1, dadurch gekennzeichnet, daß eine aliphatische Monocarbonsäure mit 7 bis 9 Kohlenstoffatomen eingesetzt wird.

3. Verfahren gemäß Anspruch 1 und 2, dadurch gekennzeichnet, daß eine verzweigte aliphatische Monocarbonsäure mit 8 Kohlenstoffatomen oder ihr Isomerengemisch eingesetzt wird.

4. Verfahren gemäß Anspruch 1 bis 3, dadurch gekennzeichnet, daß 2-Ethylhexansäure eingesetzt wird.

5. Verfahren gemäß Anspruch 1, dadurch gekennzeichnet, daß die Behandlung mit der aliphatischen Monocarbonsäure in einem mit Rührer und Einbauten versehenen Waschturm in kontinuierlichem Betrieb vorgenommen wird.

**Claims**

1. A process for removing catalyst residues from polyolefins prepared by means of catalyst containing magnesium halides and titanium and aluminium compounds by treating the polyolefin suspended in a liquid medium with an aliphatic monocarboxylic acid and separating off and washing out the polyolefin, which comprises carrying out the treatment with 0.1 to 1.5 % by weight, relative to dry polyolefin, of at least one aliphatic monocarboxylic acid having 6 to 10 carbon atoms at a temperature of 40 to 90 °C for 10 to 120 minutes.

2. The process as claimed in claim 1, wherein an aliphatic monocarboxylic acid having 7 to 9 carbon atoms is used.

3. The process as claimed in claim 1 and 2, wherein a branched aliphatic monocarboxylic acid having 8 carbon atoms or its mixed isomers are used.

4. The process as claimed in claim 1 to 3, wherein 2-ethylhexanoic acid is used.

5. The process as claimed in claim 1, wherein the treatment with the aliphatic monocarboxylic acid is carried out in continuous operation in a washing tower equipped with a stirrer and baffles.

**Revendications**

1. Procédé pour éliminer les résidus de catalyseurs de polyoléfines qui ont été préparées à l'aide de catalyseurs contenant des halogénures de magnésium, des composés du titane ou de l'aluminium, par traitement de la polyoléfine, mise en suspension dans un milieu liquide, par un acide monocarboxylique aliphatique, et séparation et lavage de la polyoléfine, caractérisé en ce qu'on procède au traitement, à une température de 40 à 90 °C, sur 10 à 120 minutes, avec 0,1 à 1,5 %-poids, par rapport à la polyoléfine sèche, d'au moins un acide monocarboxylique aliphatique ayant 6 à 10 atomes de carbone.

2. Procédé selon la revendication 1, caractérisé en ce qu'on utilise un acide monocarboxylique aliphatique à 7 à 9 atomes de carbone.

3. Procédé selon les revendications 1 ou 2, caractérisé en ce qu'on utilise un acide monocarboxylique aliphatique ramifié à 8 atomes de carbone ou un mélange de ses isomères.

4. Procédé selon les revendications 1 à 3, caractérisé en ce qu'on utilise de l'acide éthyl-2 hexanoïque.

5. Procédé selon la revendication 1, caractérisé en ce qu'on procède au traitement par l'acide monocarboxylique aliphatique d'une manière continue dans une tour de lavage pourvue d'un agitateur et d'éléments internes.